# EUROPÄISCHE PATENTSCHRIFT

(11) **EP 2 784 755 B1**
(45) Veröffentlichungstag und Bekanntmachung des Hinweises auf die Patenterteilung: **25.10.2017**
(21) Anmeldenummer: 14000769.1
(22) Anmeldetag: 04.03.2014
(51) Int. Cl.: G07C 9/00, B64D 45/00

(54) **Verfahren zur Kontrolle der Berechtigung des Zugangs einer Person zu einem geschützten Bereich**
Method for controlling the authorisation of a person to access a protected area
Procédé de contrôle de l'autorisation d'accès d'une personne à une zone protégée

(30) Priorität: 26.03.2013 DE 102013005328
(43) Veröffentlichungstag der Anmeldung: 01.10.2014
(73) Patentinhaber: Diehl Aerospace GmbH, 88662 Überlingen (DE)
(72) Erfinder: Kammer, Olaf, DE - 60599 Frankfurt (DE); Trunk, Lothar, DE - 63879 Weibersbrunn (DE); Waffenschmidt, Jörg, DE - 65719 Hofheim (DE)
(74) Vertreter: Diehl Patentabteilung

(56) Entgegenhaltungen:
- WO-A1-2012/128698
- US-A1- 2004 046 641
- US-A1- 2004 061 027

## Beschreibung

Die Erfindung betrifft ein Verfahren zur Kontrolle der Berechtigung des Zugangs einer Person zu einem geschützten Bereich eines Passagierflugzeugs, z. B. des Cockpits.

Nach dem Stand der Technik ist beispielsweise die Tür eines Cockpits eines Passagierflugzeugs gegen unbefugten Zutritt mittels einer Zugangskontrolleinrichtung geschützt. Durch Übergabe eines den Mitgliedern der Crew bekannten vorgegebenen Zahlencodes an die Zugangskontrolleinrichtung können diese - wenn der eingegebene Zahlencode von der Zugangskontrolleinrichtung als korrekt erkannt worden ist - die Tür öffnen und Zugang zum Cockpit erlangen.

Bei Passagierflugzeugen neuerer Bauart ist die Aufteilung der Passagierkabine geändert. Hier ist der Raum vor dem Cockpit Bestandteil einer Abteilung, die von den Passagieren nicht frequentiert werden soll, in der z. B. auch Toiletten, ein sog. Crew Rest Compartment oder eine Bordküche untergebracht sein können und die durch eine Zugangskontrolleinrichtung geschützt ist. Infolgedessen muss dieser Bereich wesentlich häufiger durch die Mitglieder der Crew betreten werden. Dabei kann es sein, dass die Mitglieder der Crew mit einer oder beiden Händen Gegenstände, z. B. Tabletts oder dgl., tragen, was die Übergabe eines Zahlencodes, z. B. durch Antippen von Tasten eines Tastenfelds, erschwert.

Die US 2004/0046641 A1 offenbart ein Verfahren zur Kontrolle der Berechtigung des Zugangs einer Person zu einem Gebäude. Das bekannte Verfahren umfasst die Übergabe eines Zugangscodes an eine Person, die Aufforderung der Person ein biometrisches Merkmal, welches die Person identifiziert, zu übergeben, das Speichern des biometrischen Merkmals der Person und das nachfolgende Freischalten eines Zugangs für die Person für einen vorgegebenen Zeitraum, wobei ein weiteres Freischalten eines Zugangs der Person während des vorgegebenen Zeitraums durch Verifizierung des Satzes der biometrischen Merkmale der Person ermöglicht wird.

Aufgabe der Erfindung ist es, die Nachteile nach dem Stand der Technik zu beseitigen. Es soll insbesondere ein Verfahren angegeben werden, welches einer berechtigten Person möglichst schnell und einfach einen Zugang zu einem geschützten Bereich ermöglicht.

Diese Aufgabe wird durch die Merkmale des Anspruchs 1 gelöst. Zweckmäßige Ausgestaltungen der Erfindung ergeben sich aus den Merkmalen der abhängigen Ansprüche.

Nach Maßgabe der Erfindung wird zur Kontrolle der Berechtigung des Zugangs einer Person zu einem geschützten Bereich, insbesondere zu einem Cockpit eines Passagierflugzeugs, ein Verfahren mit folgenden aufeinanderfolgenden Schritten vorschlagen:
a) Bereitstellen einer durch Eingabe eines vorgegebenen Zugangscodes freischaltbaren Zugangskontrolleinrichtung zur Erfassung eines Satzes biometrischer Merkmale,
b) Übergabe des Zugangscodes durch die Person an die Zugangskontrolleinrichtung,
c) sofern der übergegebene Zugangscode nicht korrekt ist, Abbrechen des Verfahrens,
   sofern der übergegebene Zugangscode korrekt ist, Erfassen eines Satzes biometrischer Merkmale, insbesondere des Gesichts, der den Zugangscode übergebenden Person mittels der Zugangskontrolleinrichtung,
d) Speichern des Satzes der biometrischen Merkmale der Person und
e) nachfolgendes Freischalten eines Zugangs für die Person und Starten einer Zeitmessung,
f) sofern die Person zum wiederholten Mal Zugang zum geschützten Bereich begehrt, wird ein Satz biometrischer Merkmale ermittelt und mit dem in Schritt d) gespeicherten Satz biometrischer Merkmale verglichen,
g) Fortsetzung des Verfahrens mit Schritt b), sofern der Satz ermittelter biometrischer Merkmale nicht mit dem gespeicherten Satz biometrischer Merkmale übereinstimmt,
h) sofern der Satz ermittelter biometrischer Merkmale mit dem Satz gespeicherter biometrischer Merkmale übereinstimmt, wird geprüft, ob ein vorgegebener Zeitraum seit des Startens der Zeitmessung abgelaufen ist,
i) sofern der vorgegebene Zeitraum abgelaufen ist, wird das Verfahren mit Schritt b) fortgesetzt,
k) sofern der vorgegebene Zeitraum nicht abgelaufen ist, Freischalten des Zugangs.

Zusätzlich zur Verifizierung kann noch ein Aktivierungstriggerereignis abgefragt werden. Ein solches Aktivierungstriggerereignis kann insbesondere darin bestehen, dass die Person eine bewusste und auch erforderliche Handlung oder Bewegung oder sonstiges ausführt. Das hat den Vorteil, dass durch Verwendung des Aktivierungstriggerereignisses eine unbeabsichtigte Freischaltung des Zugangs vermieden werden kann. Lediglich wenn das Aktivierungstriggerereignis und die Übereinstimmung der biometrischen Merkmale mit den in der Datenbank gespeicherten Merkmalen kumulativ vorliegen kann eine Freischaltung des Zugangs erfolgen. Weitere Maßnahmen zur Vermeidung unbeabsichtigter Freigaben können umgesetzt sein, um beispielsweise, wie auch mit dem Aktivierungstriggerereignis, eine Freischaltung des Zugangs im Vorbeigehen an dem geschützten Bereich zu vermeiden.

Im Sinne der vorliegenden Erfindung handelt es sich bei dem Zugangscode um einen Code, welcher in der Zugangsberechtigungseinrichtung hinterlegt ist. Der Zugangscode kann geändert werden. Eine Änderung des Zugangscodes ist allerdings nur besonders berechtigten Personen möglich, die insbesondere nicht der Crew angehören. Der Zugangscode ist üblicherweise über einen längeren Zeitraum hinweg gültig, als der vorgegebene Zeitraum. Bei dem Zugangscode kann es sich um einen aus Zahlen und/oder Buchstaben gebildeten Code handeln, welcher durch Antippen entsprechender Tasten eines Tastenfelds an die Zugangskontrolleinrichtung übergeben werden kann. Der Zugangscode kann aber auch auf einem Magnetstreifen, einem Transponder oder dgl. gespeichert sein, welcher z. B. Bestandteil einer Identifikationskarte ist.

Nach der korrekten Eingabe des Zugangscodes wird die betreffende Person aufgefordert, sich in geeigneter Weise zur Erfassung bzw. Extrahierung der biometrischen Merkmale zu positionieren, beispielsweise kann die Person aufgefordert werden, mit dem Gesicht in eine Kamera zu schauen. Aus den erfassten Informationen, beispielsweise einer gewonnen Aufnahme, wird nach einem vorgegebenen Algorithmus ein für die Person spezifischer Satz biometrischer Merkmale hergestellt und gespeichert. Gleichzeitig bzw. im Zusammenhang mit der Extraktion der biometrischen Merkmale bzw. mit der auf dem Zugangscode basierenden Freigabe beginnt eine Zeitmessung zu laufen. Anschließend, d. h. zumindest nach der Erfassung eines zur Extraktion der biometrischen Daten erforderlichen Bereichs, wird der betreffenden Person Zugang zum geschützten Bereich gewährt, insbesondere basierend lediglich auf dem Zugangscode.

Wenn nun die Person während des vorgegebenen Zeitraums, der beispielsweise der Dauer einer Arbeitsschicht entspricht, erneut Zugang zum geschützten Bereich begehrt, wird dieser schon dann gewährt, wenn eine Überprüfung der biometrischen Merkmale der Peron ergibt, dass diese mit einem gespeicherten Satz an biometrischen Merkmalen übereinstimmt. Dazu ist es z. B. lediglich erforderlich, dass die betreffende Person in die Kamera schaut, worauf basierend die biometrischen Merkmale erfasst und extrahiert, und mit dem oder den gespeicherten Sätzen an biometrischen Daten verglichen werden. Stimmen die erfassten biometrischen Daten mit einem bereits gespeicherten Datensatz überein, so wird der jeweiligen Person Zutritt gewährt. Somit ist im Wiederholungsfall der Zugang zum geschützten Bereich während des vorgegebenen Zeitraums einfach und schnell möglich, insbesondere kann vermieden werden, dass die Person wiederholt den Zugangscode eingeben muss, was beispielsweise im Service-Bereich nicht immer möglich ist, wenn die jeweilige Person z. B. keine Hand zur Eingabe des Zugangscodes frei hat.

Bei dem geschützten Bereich kann es sich um einen Raum handeln. Der Raum kann insbesondere eine Abteilung in einem Fahrzeug, vorzugsweise einem Luftfahrzeug, sein. Das erfindungsgemäße Verfahren eignet sich aber auch zur Kontrolle des Zugangs zu anderen schutzbedürftigen Bereichen, z. B. einer Datenverarbeitungseinrichtung oder dgl.

Insgesamt ergibt sich bei dem vorgeschlagenen Verfahren, dass mit oder nach der Eingabe des Zugangscodes, personenspezifische biometrische Merkmale erfasst und gespeichert werden, und dass die biometrischen Merkmale zumindest für den vorgegebenen Zeitraum als Ersatz für den Zugangscode verwendet werden. Die Eingabe des Zugangscodes ist damit geeignet, die Erfassung der biometrischen Merkmale zu initiieren und diese für eine Zeit beschränkter Dauer, mit dem Zugangscode zu verknüpfen, insbesondere derart dass der Zugang zum geschützten Bereich durch Eingabe des Zugangscodes, und vorteilhaft gemäß der Erfindung auch ohne wiederholte Eingabe des Zugangscodes lediglich auf Grundlage der biometrischen Daten erfolgen kann. Ein Vorteil ist insbesondere auch darin zu sehen, dass etwaige Veränderungen in den biometrischen Merkmalen, die u. U. auftreten können, z. B. im Gesicht einer Person, nicht berücksichtigt werden brauchen.

Mit dem vorgeschlagenen Verfahren kann damit erreicht werden, dass eine händisch bzw. manuell zu aktivierende Zugangsberechtigung, zumindest zeitweise, in eine berührungslos aktivierbare Zugangsberechtigung, insbesondere basierend auf biometrischen Daten oder Merkmalen, umgewandelt wird. In Verallgemeinerung der erfindungsgemäßen Idee wäre es insbesondere auch denkbar, den Zugangscode für durch eine beliebige Art von personenspezifischer Information zu ersetzen, wobei hier auch aus einem aktiven oder passiven Speicher, den die Person mit sich führt, ausgelesene Informationen oder sonstige Informationen verwendet werden können. Die Verwendung eines manuell einzugebenden Zugangscodes hat insoweit den Vorteil, als zumindest einmalig eine bewusste Freischaltung erfolgen muss. Es kann also vermieden werden, dass der Zugang basierend z. B. auf biometrischen Daten automatisch freigeschalten ist, obwohl die jeweilige Person keinen Zugang beabsichtigt.

Nach einer vorteilhaften Ausgestaltung der Erfindung ist der Zugangscode ein Zahlencode. Er kann auf einem Datenträger, vorzugsweise einem Magnetstreifen oder einem Transponder, gespeichert sein. Der Zugangscode ist zweckmäßigerweise spezifisch für die Person oder für eine Personengruppe, welcher die Person angehört.

Z. B. kann der Crew eines Passagierflugzeugs als Zugangscode ein Zahlencode, wie z. B. "2234", bekannt sein.

Die Zugangskontrolleinrichtung ermittelt die biometrischen Merkmale bevorzugt aus dem Gesicht bzw. den Gesichtszügen der Person, beispielsweise nach einem vorgegebenen Algorithmus.

Nach dem Verfahren ist ein erneuter Zugang zu dem geschützten Bereich nach Ablauf des vorgegebenen Zeitraums erst nach nochmaliger Übergabe des Zugangscodes möglich. Die Verwendung gesichtsbezogener biometrischer Daten ist insbesondere für den Anwendungsfall in der Kabine eines Verkehrsflugzeugs verwendbar, da das Gesicht bzw. die Gesichtszüge der jeweiligen Personen im Flugzeug in der Regel zugänglich sind, insbesondere nicht durch Kleidungsstücke verdeckt sind. Die Verwendung von Gesichtszügen hat insbesondere auch den Vorteil, dass es zur Ermittlung der biometrischen Daten einer aktiven und bewussten Handlung der jeweiligen Person bedarf, die beispielsweise darin bestehen kann, in eine speziell angeordnete Kamera zu blicken. Eine zufällige Freigabe des Zugangs kann so weitgehend vermieden werden.

In Ausgestaltungen ist vorgesehen, dass nach Ablauf des vorgegebenen Zeitraums die Zugangsberechtigung basierend auf den biometrischen Daten ungültig wird, und zur Freischaltung des Zugangs der Zugangscode erneut eingegeben werden muss.

In Ausgestaltungen ist der Zugangscode spezifisch für eine Person oder eine ganze Personengruppe. Bei einer Personengruppe kann der Verfallszeitpunkt, d. h. der vorgegebene Zeitraum, für jede Person gesondert festgesetzt werden.

Im Rahmen der Erfindung sollen auch Ausgestaltungen möglich sein, in welchen der Zugang wiederholt nacheinander auch ohne Erfassung und Speicherung der biometrischen Daten möglich sein soll. Jedoch wäre dabei für jeden gewährten Zugang die Eingabe des Zugangscodes erforderlich.

In einer Betriebsvariante wäre es denkbar, dass die Person nach Eingabe, insbesondere manuelle Eingabe, des Zugangscodes abgefragt wird, in welcher Weise die zukünftige Freischaltung, insbesondere für den vorgegebenen Zeitraum, erfolgen soll. Hier ist es z. B. möglich, dass die Person wählen kann, ob für die Freischaltung des Zugangs für den vorgegebenen Zeitraum weiterhin der Zugangscode oder stattdessen biometrische Daten verwendet werden sollen. Bei der Auswahl der Freischaltung mit biometrischen Daten folgt die Erfassung und Speicherung der biometrischen Daten. Hierzu wird auf die obigen Ausführungen verwiesen.

Nachfolgend wird die Erfindung anhand der Zeichnungen näher erläutert. Es zeigen:
- Fig. 1: ein erstes Flussdiagramm "A" und
- Fig. 2: ein zweites Flussdiagramm "B".

Das erfindungsgemäße Verfahren kann beispielsweise dazu verwendet werden, den Zugang zu einer bestimmten Abteilung, z. B. einem das Cockpit umfassenden Bereich, oder zu sonstigen Bereichen oder Abschnitten, in einem Passagierflugzeug zu sichern. In Betracht kommen insbesondere Zugangssicherungen für VIP-Flugzeuge oder VIP-Bereiche, Zugangssicherung oder -beschränkung zu First Class, Küchenbereich (Galley), Flugpersonal- und Flugbegleiterkabinen (Crewrest Compartments), Toiletten, Waschräumen (Lavatory), Technikabteilen, Maschinenabteilen usw.

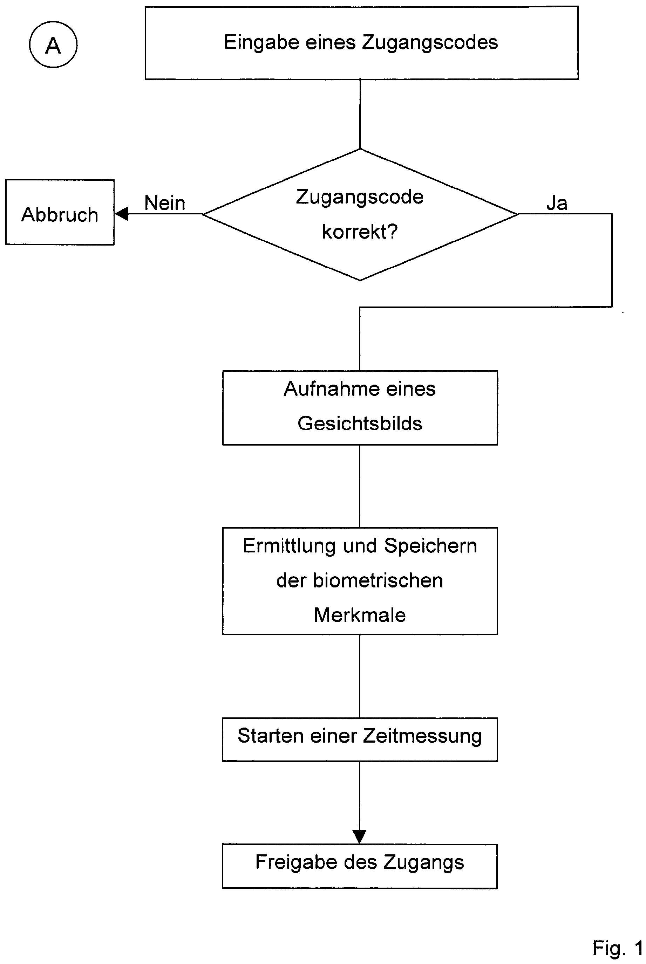

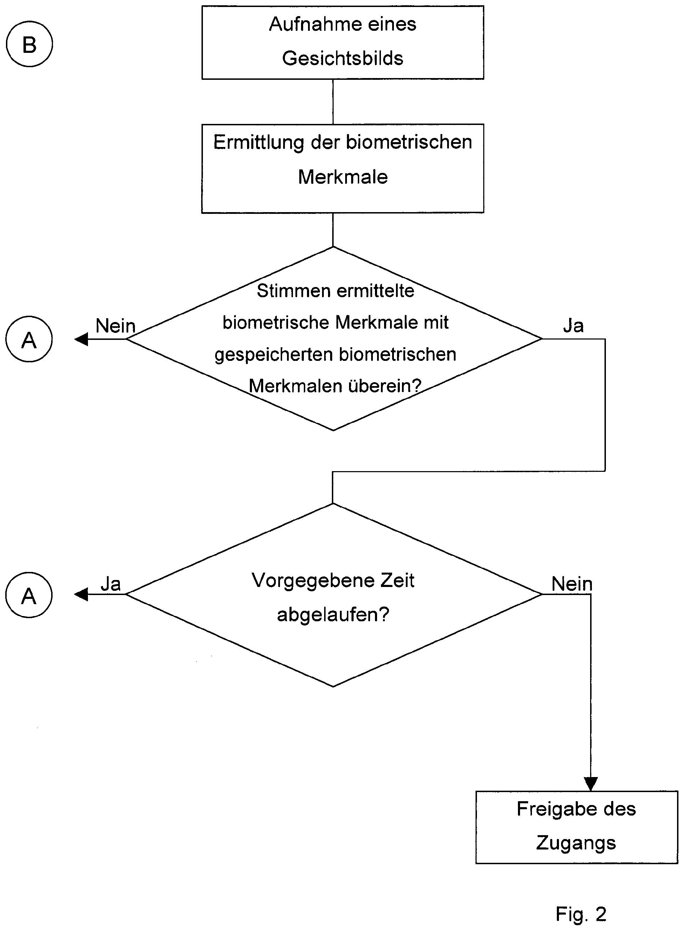

Dazu ist die betreffende Abteilung mit einer Tür verschließbar. Die Tür ist mit einem Schloss gesichert, welches mit einer elektronischen Zugangskontrolleinrichtung geöffnet werden kann. Bei der Zugangskontrolleinrichtung kann es sich um einen Computer mit einer Kamera und einem Touchscreen handeln, wobei der Touchscreen ein aus Zahlen und/oder Buchstaben gebildetes Tastenfeld abbilden, und dazu ausgelegt sein kann, dass eine Person/ein Benutzer durch manuelle Betätigung eine Zahlen und/oder Buchstabenfolge eingeben kann. Mit der Zugangskontrolleinrichtung kann insbesondere das in den Fig. 1 und 2 in Form von Flussdiagrammen dargestellte Verfahren ausgeführt werden.

Fig. 1 zeigt die Verfahrensschritte, welche zur Erlangung eines erstmaligen Zugangs zum geschützten Bereich ausgeführt werden können. Einer berechtigten Person ist ein in der Zugangskontrolleinrichtung hinterlegter Zugangscode bekannt. Es kann sich dabei beispielsweise um eine Zahlenfolge, wie "2234", handeln.

In einem ersten Schritt gibt die betreffende Person, beispielsweise durch Antippen der entsprechenden Ziffern des auf dem Touchscreen abgebildeten Tastenfelds, den Zugangscode ein.

Der eingegebene Zugangscode wird vom Computer mit dem hinterlegten Zugangscode verglichen. Falls der eingegebene Zugangscode mit dem hinterlegten Zugangscode nicht übereinstimmt, wird das Verfahren abgebrochen, und ggf. von neuem begonnen.

Falls der eingegebene Zugangscode mit dem hinterlegten Zugangscode übereinstimmt, wird die betreffende Person dazu aufgefordert, mit dem Gesicht in eine Kamera zu blicken. D. h. die Person wird dazu aufgefordert, sich zur Extraktion der biometrischen Merkmale zu positionieren.

In einer Betriebsvariante wäre es denkbar, dass die Person abgefragt wird, ob weiterhin der Zugangscode zur Freischaltung des Zugangs verwendet werden soll, oder ob für den vorgegebenen Zeitraum stattdessen die biometrischen Daten verwendet werden sollen.

Im Falle der Verwendung der biometrischen Zugangskontrolle kann mittels der Zugangskontrolleinrichtung nun ein Bild oder Abbild des Gesichts oder von Gesichtszügen der Person hergestellt. Sodann werden auf der Grundlage des Bilds, oder direkt aus dem Gesicht oder den Gesichtszügen die biometrischen Merkmale des Gesichts ermittelt bzw. extrahiert und in einer Datenbank, insbesondere in einem Speicher, abgespeichert. Gleichzeitig oder in diesem Zusammenhang wird eine Zeitmessung gestartet. Der Zugang zum geschützten Bereich wird freigegeben. Die Freigabe kann so erfolgen, dass die Zugangskontrolleinrichtung das Schloss der Tür kurzzeitig öffnet.

Fig. 2 zeigt die Schritte eines Verfahrens "B", welche dann ausgeführt werden, wenn die Zugangskontrolle basierend auf den biometrischen Merkmalen durchgeführt werden soll, und die Person zum wiederholten Mal Zugang zum geschützten Bereich begehrt. Durch ein Aktivierungstriggerereignis wird in einem ersten Schritt wiederum ein Bild des Gesichts der den Zugang begehrenden Person hergestellt, bzw. es werden die biometrischen Merkmale der triggernden Person erfasst und ermittelt.

Der ermittelte Satz der biometrischen Merkmale wird dann mit den in der Datenbank abgespeicherten weiteren Sätzen an biometrischen Merkmalen verglichen.

Falls der Satz der ermittelten biometrischen Merkmale mit keinem der weiteren Sätze an biometrischen Merkmalen übereinstimmt, wird das Verfahren "A" gestartet.

Sofern der Satz der biometrischen Merkmale mit einem der in der Datenbank gespeicherten Sätze an biometrischen Merkmalen übereinstimmt, wird geprüft, ob ein mit diesem Satz von biometrischen Merkmalen verknüpfter vorgegebener Zeitraum abgelaufen ist. Das kann durch Vergleich der beim Verfahren "A" gestarteten Zeitmessung mit einer vorgegebenen Zeitdauer, beispielsweise 8 Stunden, erfolgen. Sofern festgestellt wird, dass die vorgegebene Zeit abgelaufen ist, wird das Verfahren "A" (siehe Fig. 1) gestartet.

Sofern die vorgegebene Zeitdauer noch nicht abgelaufen ist, wird der Person der Zugang zum geschützten Bereich freigegeben.

## Patentansprüche

1. Verfahren zur Kontrolle der Berechtigung des Zugangs einer Person zu einem geschützten Bereich, insbesondere zu einem Cockpit eines Passagierflugzeugs, mit aufeinanderfolgenden Schritten:
a) Bereitstellen einer durch Eingabe eines vorgegebenen Zugangscodes freischaltbaren Zugangskontrolleinrichtung zur Erfassung eines Satzes biometrischer Merkmale,
b) Übergabe des Zugangscodes durch die Person an die Zugangskontrolleinrichtung,
c) sofern der übergegebene Zugangscode nicht korrekt ist, Abbrechen des Verfahrens,
sofern der übergegebene Zugangscode korrekt ist, Erfassen eines Satzes biometrischer Merkmale, insbesondere des Gesichts, der den Zugangscode übergebenden Person mittels der Zugangskontrolleinrichtung,
d) Speichern des Satzes der biometrischen Merkmale der Person und
e) nachfolgendes Freischalten eines Zugangs für die Person und Starten einer Zeitmessung,
f) sofern die Person zum wiederholten Mal Zugang zum geschützten Bereich begehrt, wird ein Satz biometrischer Merkmale ermittelt und mit dem in Schritt d) gespeicherten Satz biometrischer Merkmale verglichen,
g) Fortsetzung des Verfahrens mit Schritt b), sofern der Satz ermittelter biometrischer Merkmale nicht mit dem gespeicherten Satz biometrischer Merkmale übereinstimmt,
h) sofern der Satz ermittelter biometrischer Merkmale mit dem Satz gespeicherter biometrischer Merkmale übereinstimmt, wird geprüft, ob ein vorgegebener Zeitraum seit des Startens der Zeitmessung abgelaufen ist,
i) sofern der vorgegebene Zeitraum abgelaufen ist, wird das Verfahren mit Schritt b) fortgesetzt,
k) sofern der vorgegebene Zeitraum nicht abgelaufen ist, Freischalten des Zugangs.

2. Verfahren nach Anspruch 1, wobei der geschützte Bereich ein Raum ist.

3. Verfahren nach Anspruch 2, wobei der Raum eine Abteilung in einem Fahrzeug, vorzugsweise einem Luftfahrzeug, ist.

4. Verfahren nach einem der vorhergehenden Ansprüche, wobei der geschützte Bereich eine Datenverarbeitungseinrichtung ist.

5. Verfahren nach einem der vorhergehenden Ansprüche, wobei der Zugangscode ein Zahlencode ist.

6. Verfahren nach einem der vorhergehenden Ansprüche, wobei der Zugangscode auf einem Datenträger, vorzugsweise einem Magnetstreifen oder einem Transponder, gespeichert ist.

7. Verfahren nach einem der vorhergehenden Ansprüche, wobei der Zugangscode spezifisch für die Person oder für eine Personengruppe ist, welcher die Person angehört.

8. Verfahren nach einem der vorhergehenden Ansprüche, wobei die biometrischen Merkmale aus dem Gesicht der Person, insbesondere nach einem vorgegebenen Algorithmus ermittelt werden.

## Claims

1. Method for controlling the authorization of a person to access a secure area, in particular a cockpit of a passenger aircraft, comprising the successive steps of:
a) providing an access control apparatus for detecting a set of biometric features, which apparatus can be enabled by entering a predetermined access code,
b) transfer of the access code by the person to the access control apparatus,
c) if the transferred access code is not correct, terminating the method,
if the transferred access code is correct, detecting by means of the access control apparatus a set of biometric features, in particular of the face, of the person transferring the access code,
d) saving the set of biometric features of the person, and
e) subsequently enabling access for the person and starting a time measurement,
f) if the person requests access to the secure area once again, a set of biometric features is determined and compared with the set of biometric features saved in step d),
g) continuing the method with step b) if the set of determined biometric features does not match the saved set of biometric features,
h) if the set of determined biometric features does match the set of saved biometric features, a check is performed to determine whether a predetermined period of time has elapsed since the time measurement was started,
i) if the predetermined period of time has elapsed, the method is continued with step b),
k) if the predetermined period of time has not elapsed, access is enabled.

2. Method according to Claim 1, wherein the secure area is a room.

3. Method according to Claim 2, wherein the room is a compartment in a vehicle, preferably in an aircraft.

4. Method according to any of the preceding claims, wherein the secure area is a data processing facility.

5. Method according to any of the preceding claims, wherein the access code is a numeric code.

6. Method according to any of the preceding claims, wherein the access code is stored on a data storage medium, preferably on a magnetic strip or a transponder.

7. Method according to any of the preceding claims, wherein the access code is specific to the person or a group of people to which the person belongs.

8. Method according to any of the preceding claims, wherein the biometric features are determined from the face of the person, in particular on the basis of a predetermined algorithm.

## Revendications

1. Procédé de contrôle de l'autorisation d'accès d'une personne dans une zone protégée, notamment un cockpit d'un aéronef de transport de passagers, comprenant les étapes suivantes :
a) mise à disposition d'un dispositif de contrôle d'accès qui peut être libéré en saisissant un code d'accès prédéfini, en vue de saisir un ensemble de caractéristiques biométriques,
b) transmission du code d'accès par la personne au dispositif de contrôle d'accès,
c) si le code d'accès transmis est incorrect, interruption du procédé,
si le code d'accès transmis est correct, acquisition d'un ensemble de caractéristiques biométriques, notamment du visage, de la personne qui transmet le code d'accès au moyen du dispositif de contrôle d'accès,
d) mise en mémoire de l'ensemble de caractéristiques biométriques de la personne, et
e) ensuite libération d'un accès pour la personne et démarrage d'une mesure du temps
f) si la personne répète la demande d'accès à la zone protégée, un ensemble de caractéristiques biométriques est déterminé et comparé avec l'ensemble de caractéristiques biométriques mis en mémoire à l'étape d),
g) poursuite du procédé à l'étape b) si l'ensemble de caractéristiques biométriques déterminé ne coïncide pas avec l'ensemble de caractéristiques biométriques mis en mémoire,
h) si l'ensemble de caractéristiques biométriques déterminé coïncide avec l'ensemble de caractéristiques biométriques mis en mémoire, un contrôle est effectué pour vérifier si une période prédéfinie s'est écoulée depuis le début de la mesure du temps,
i) si la période prédéfinie s'est écoulée, le procédé se poursuit avec l'étape b),
k) si la période prédéfinie ne s'est pas écoulée, libération de l'accès.

2. Procédé selon la revendication 1, la zone protégée étant un espace.

3. Procédé selon la revendication 2, l'espace étant un compartiment dans un véhicule, de préférence un aéronef.

4. Procédé selon l'une des revendications précédentes, la zone protégée étant un dispositif de traitement de données.

5. Procédé selon l'une des revendications précédentes, le code d'accès étant un code à chiffres.

6. Procédé selon l'une des revendications précédentes, le code d'accès étant enregistré sur un support de données, de préférence une bande magnétique ou un transpondeur.

7. Procédé selon l'une des revendications précédentes, le code d'accès étant spécifique pour la personne ou pour un groupe de personnes duquel fait partie la personne.

8. Procédé selon l'une des revendications précédentes, les caractéristiques biométriques étant déterminées à partir du visage de la personne, notamment d'après un algorithme prédéfini.
